# EUROPEAN PATENT APPLICATION

(11) **EP 4 541 559 A1**
(43) Date of publication of application: **23.04.2025**
(21) Application number: 22940941.2
(22) Date of filing: 28.06.2022
(51) Int. Cl.: B29C 64/129, B29C 64/214, B29C 64/245, B33Y 10/00, B33Y 30/00

(54) **3D PRINTING DEVICE CONVENIENT TO OPERATE AND 3D PRINTING METHOD**

(30) Priority: 20.06.2022 CN 202210698145
(71) Applicant: BMF Nano Material Technology Co., Ltd., Shenzhen, Guangdong 518000 (CN)
(72) Inventor: PENG, Chong, Shenzhen, Guangdong 518000 (CN)
(74) Representative: Ipside
(86) International application number: PCT/CN2022/101742
(87) International publication number: WO 2023/245692

(57) **Abstract**

This disclosure relates to a 3D printing device for convenient operation and method. The 3D printing device includes a liquid tank, a printing platform, a release film assembly, a leveling roller assembly, and a bubble scraper. The liquid tank is widened on one side to form an extended area. The bubble scraper is positioned within the extended area and fixed at the bottom of the extended area of the liquid tank near the main body area. The release film assembly and the leveling roller assembly can both move laterally. The advantageous effects of the present invention are as follows: 1) Fewer and simpler manual operations before and after printing; 2) The present invention reduces the risk of damage caused by frequent manual installation and removal of the leveling roller, which is a delicate and fragile component, and reduces the time wasted on repeated leveling adjustments when reinstalling the leveling roller; 3) The present invention reduces the risk of contamination caused by liquid resin dripping when removing the release film.

## Description

### Technical Field

The present invention relates to the field of photopolymerization 3D printing technology, particularly relating to a 3D printing device for convenient operation and method.

### Background Art

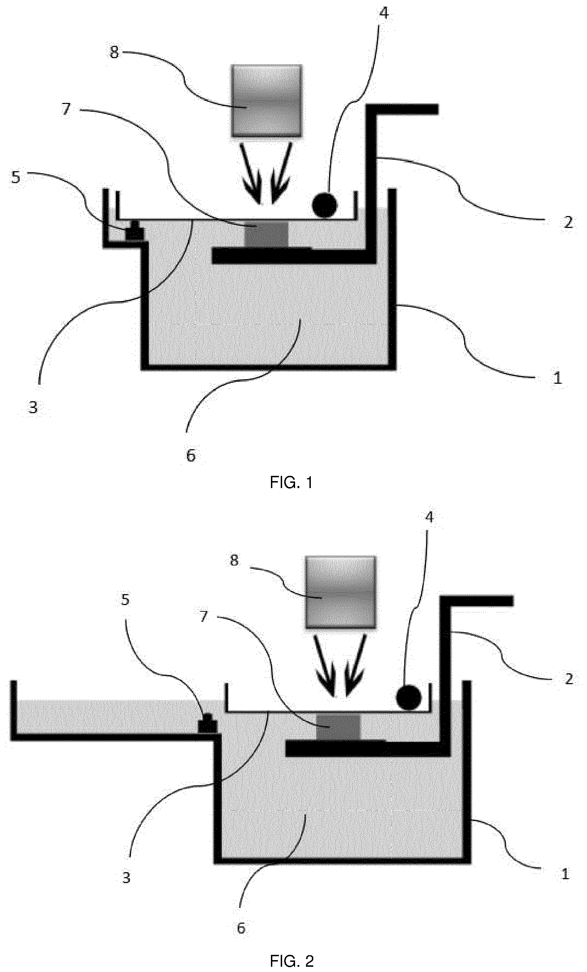

Currently, high-precision stereolithography 3D printing often adopts a configuration where the light source is positioned above and the liquid tank is positioned below. The purpose of this configuration is to use thinner release films or even self-leveling methods to accurately project patterns onto photosensitive resin, thereby achieving higher precision. However, with the increasing demand for printing size and compatibility with liquid resin viscosity, even with the use of release films, a significant amount of time is still required for leveling during the actual printing process in order to achieve the desired layer thickness. Therefore, BMF has developed a new method for rapid leveling using rollers to address the issue of long leveling times and low efficiency during printing. Figure 1 illustrates the current 3D printing structure, where the optical path is positioned above the liquid tank 1, and the release film assembly 3 is fixed to the liquid tank 1. When the printing platform 2 rises, it lifts the liquid resin 6 along with the release film assembly 3, causing it to bulge upward. At this point, the leveling roller assembly 4 on the upper surface of the release film assembly 3 can be moved left and right to eliminate the bulging. This method significantly reduces the leveling waiting time during the printing process. The method also includes a bubble scraper 5, which can slide along the lower surface of the release film assembly 3 to eliminate bubbles and prevent them from affecting print quality. Currently, the following manual operations are required: before each print, the printing platform 2 must be manually installed, followed by the manual installation of the release film assembly 3 and the leveling roller assembly 4. After each print, the leveling roller assembly 4 must be manually removed, followed by the manual removal of the release film assembly 3 and the printing platform 2 in order to obtain the printed sample.

The current method using rapid leveling with rollers requires the manual removal of the leveling roller assembly 4, followed by the manual removal of the release film assembly and finally the manual removal of the printing platform 2 to obtain the printed sample.

The current method has the following disadvantages.
1. Frequent and complex manual operations before and after printing.
2. The leveling roller assembly is a delicate and fragile component, and frequent manual installation and removal pose a risk of damage.
3. When removing the release film, it may be contaminated with liquid resin, posing a risk of contamination due to resin spillage.

### Summary of the Invention

The technical problem to be solved by the present invention is to provide a 3D printing device for convenient operation and method to address the issue in existing technology where, after each print, the leveling roller must be manually removed, followed by the manual removal of the release film assembly and the printing platform to obtain the printed sample.

According to one aspect of the invention, the present invention provides a 3D printing device for convenient operation, comprising:
- a liquid tank which is used to contain the printing liquid resin, the liquid tank has a main area and an extended area, with the extended area located on one side of the top of the main area;
- a printing platform which is used to support the printed sample, extending into the main area of the liquid tank;
- a release film assembly, comprising a release film and a release film driving component, the release film driving component is used to drive the release film to move between the main area and the extended area of the liquid tank;
- a leveling roller assembly, comprising a leveling roller main body and a roller driving component, the roller driving component is used to drive the leveling roller main body to move between the main area and the extended area of the liquid tank. The lowest point of the leveling roller main body is aligned with the upper surface of the release film;
- a bubble scraper, which is positioned within the extended area and fixed at the bottom of the extended area of the liquid tank, close to one side of the main area. The top of the bubble scraper aligns with the bottom of the release film.

Preferably, the 3D printing device of the present invention has the bubble scraper installed at the bottom of the extended area of the liquid tank through a spring and a guide shaft.

Preferably, the 3D printing device of the present invention includes:
- a mounting substrate;
- linear guides fixed on the mounting substrate along a first direction, where the first direction represents the direction in which the printing platform moves between the main area and the extended area of the liquid tank;
- a release film support assembly mounted on the linear guide and capable of moving along the first direction driven by the release film driving component. The release film support assembly has a release film clamping component, and the release film is installed on the release film clamping component.

Preferably, the release film support assembly of the 3D printing device of the present invention includes:
- a transmission frame connected to the linear guide through a first slider;
- a release film leveling pillars fixed on the transmission frame;
- a leveling frame connected to the release film leveling pillars through release film leveling knobs. The release film clamping component is installed on the leveling frame.

Preferably, the release film driving component of the 3D printing device of the present invention includes:
- a first stepper motor fixed at the bottom of the mounting substrate;
- a first timing belt connecting the first stepper motor and the transmission frame to drive the transmission frame.

Preferably, the 3D printing device of the present invention further includes limitation blocks set at the four corners of the mounting substrate to prevent excessive movement of the transmission frame.

Preferably, a position sensor is installed on one side edge of the mounting substrate to sense the position of the transmission frame, limiting the lateral movement of the release film clamping component according to the position sensor.

Preferably, the roller driving component of the 3D printing device of the present invention includes:
- a second stepper motor fixed at the bottom of the mounting substrate;
- a second timing belt connecting the second stepper motor and the roller support assembly to drive the roller support assembly. The roller support assembly is movably installed on the linear guide.

Preferably, the roller support assembly of the 3D printing device of the present invention includes:
- a transmission connecting rod connected to the linear guide through a second slider.
- a rear roller leveling pillar and front roller leveling pillar, respectively installed on both sides of the transmission connecting rod. The connection points between the rear roller leveling pillar, front roller leveling pillar, and the transmission connecting rod are adjusted by rear roller leveling knob and front roller leveling knob.

The top of the rear roller leveling pillar and front roller leveling pillar is connected to the main body of the leveling roller.

According to another aspect of the invention, a method for 3D printing using a release film to evenly spread liquid coating is provided. The method utilizes the 3D printing device described above and includes the following steps:
S1: Move the release film and leveling roller assembly to the extended area and place the printing platform into the main body area of the liquid tank.

S2: Control the movement of the release film to the main body area and adjust the printing platform to the desired printing position, ensuring a layer thickness distance between the printing platform and the lower surface of the release film. Wait for leveling.

S3: Keep the release film stationary while the leveling roller assembly starts moving towards the main body area of the liquid tank and stops after reaching the left or right edge closer to the release film.

S4: Keep the release film stationary while the leveling roller assembly moves to the other side edge of the release film.

S5: Repeat steps S3 to S4 until any bulges on the release film are eliminated.

S6: Focus the pattern onto the release film using a UV lens and perform exposure curing to obtain a cured pattern.

S7: Control the descent of the printing platform to separate the cured printed sample from the release film.

S8: Move the release film and leveling roller assembly laterally to the extended area of the liquid tank, then raise the bubble scraper to press against the lower surface of the release film.

S9: Move the release film and leveling roller assembly laterally to the main body area of the liquid tank. Utilize the bubble scraper to remove bubbles from the lower surface of the release film, then lower the bubble scraper.

S10: Repeat steps S2 to S9 until the sample printing is completed.

S11: Move the release film and leveling roller assembly laterally to the extended area of the liquid tank and remove the printing platform with the printed sample.

The advantageous effects of the present invention are as follows:
1. Fewer and simpler manual operations before and after printing.
2The present invention reduces the risk of damage caused by frequent manual installation and removal of the leveling roller, as the leveling roller is a delicate and fragile component. It also reduces the time wasted on repeated leveling adjustments when reinstalling the leveling roller.
3. The present invention reduces the risk of contamination caused by liquid resin dripping when removing the release film.

### Brief Description of the Drawings

The technical solutions of the present invention are further described below in connection with the accompanying drawings and embodiments.
Figure 1 is a schematic diagram illustrating the principle of traditional roller leveling 3D printing.
Figure 2 is a schematic diagram illustrating the structure of a 3D printing device for convenient operation according to an embodiment of the present invention.
Figure 3 is a schematic diagram illustrating the operational steps of a 3D printing device for convenient operation according to an embodiment of the present invention.
Figure 4 is a three-dimensional view of the overall structure of a 3D printing device for convenient operation according to an embodiment of the present invention.
Figure 5 is a side view of the overall structure of a 3D printing device for convenient operation according to an embodiment of the present invention.
Figure 6 is a schematic diagram illustrating the structure of the release film assembly and leveling roller assembly according to an embodiment of the present invention.
Figure 7 is a schematic diagram illustrating the structure of the liquid tank component according to an embodiment of the present invention.

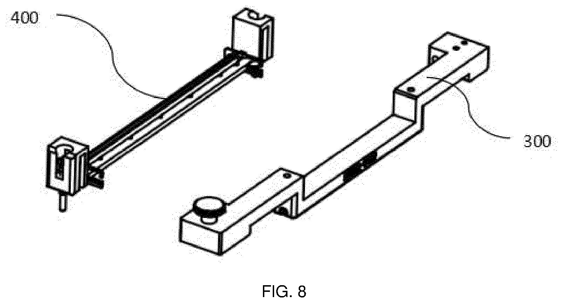

Figure 8 is a schematic diagram illustrating the structure of the leveling roller main body and bubble scraper main body according to an embodiment of the present invention.

The reference numerals in the figures are as follows:

### List of reference numerals:

1 - Liquid tank,
2 - Printing platform,
3 - Release film assembly,
4 - Leveling roller assembly,
5 - Bubble scraper,
6 - Liquid resin,
7 - Printed sample,
8 - UV lens,
122, 124 - First slider,
123 - Second slider,
101 - Mounting substrate,
102, 103 - Linear guide,
104 - Second stepper motor,
105 - First stepper motor,
106 - Second timing belt,
107 - First timing belt,
108 - Limitation block,
109 - Transmission frame,
110, 111, 112 - Release film leveling pillars,
113 - Leveling frame,
114 - Position sensor,
115 - Transmission connecting rod,
116 - Rear roller leveling pillar,
117 - Front roller leveling pillar,
118 - Rear roller leveling knob,
119 - Front roller leveling knob,
120, 121 - Release film leveling knobs,
500 - Release film clamping component,
200 - Main body of the liquid tank,
400 - Bubble scraper main body.

### Detailed Description of Embodiments

It should be noted that, unless conflicting, the features of the embodiments in this disclosure can be combined with each other. In the description of this disclosure, it should be understood that terms such as "center," "longitudinal," "lateral," "top," "bottom," "front," "rear," "left," "right," "vertical," "horizontal," "top," "bottom," "inner," "outer," and the like indicate orientations or positional relationships based on the orientations or positional relationships shown in the drawings. They are used for the convenience of describing this disclosure and simplifying the description, and do not indicate or imply that the devices or components referred to must have specific orientations, be constructed and operated in specific orientations. Therefore, they should not be understood as limiting the scope of this disclosure. Furthermore, terms such as "first," "second," etc., are used for descriptive purposes only and should not be understood as indicating or implying relative importance or implicitly indicating the quantity of the indicated technical features. Thus, features described as "first," "second," etc., can explicitly or implicitly include one or more of such features. In the description of the present invention, unless otherwise specified, the term "multiple" means two or more. In the description of this disclosure, it should be noted that, unless otherwise expressly specified and limited, terms such as "mounting," "connected," "connected" should be broadly interpreted. For example, they can be fixed connections or detachable connections, or integral connections; they can be mechanical connections or electrical connections; they can be directly connected or indirectly connected through intermediate media; they can be internal connections between two components. Those skilled in the art in this field can understand the specific meanings of the above terms in this disclosure based on specific circumstances. The following will refer to the drawings and combine with embodiments to describe the technical solutions of this disclosure in detail.

### Embodiment

This embodiment provides a printing device for convenient operation, as shown in Figure 2, comprising:
- a liquid tank 1, which is used to contain liquid resin 6 for printing. The liquid tank 1 has a main area and an extended area, with the extended area located on one side of the top of the main area.
- a printing platform 2, used to support the printed sample 7, extending into the main area of the liquid tank 1.
- a release film assembly 3, including a release film and a release film driving component. The release film driving component is used to drive the release film to move, allowing the release film to move between the main area and the extended area.
- a leveling roller assembly 4, including a leveling roller main body 300 and a roller driving component. The roller driving component is used to drive the leveling roller main body 300 to move, allowing the leveling roller main body 300 to move between the main area and the extended area. The lowest point of the leveling roller main body 300 is aligned with the upper surface of the release film.
- a bubble scraper 5, positioned within the extended area and fixed to the bottom of the extended area of the liquid tank 1, close to one side of the main area. The top of the bubble scraper 5 is aligned with the bottom of the release film.

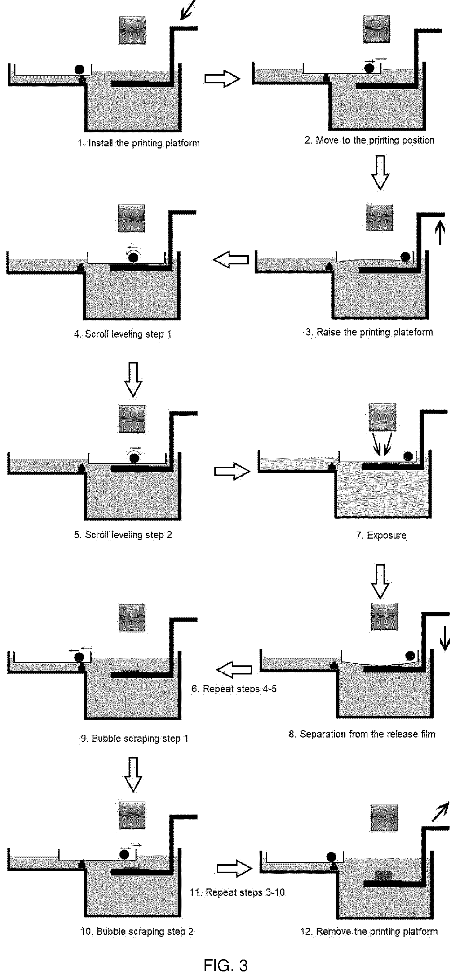

In this embodiment of the 3D printing device, the lifting of the printing platform 2 is driven by a motion axis (not shown in the figure), and the lifting of the printing platform 2, the movement of the release film assembly 3, and actions such as UV exposure are controlled by control software installed on an industrial computer. The control software enables the movement of each component to follow the flowchart shown in Figure 3. Innovative improvements have been made to the liquid tank 1, release film assembly 3, leveling roller assembly 4, bubble scraper 5, and specific printing process compared to existing methods (as shown in Figure 1). The width of the left side of the liquid tank 1 has been increased, adding the function of lateral movement to the release film assembly 3, and the installation structure of the bubble scraper 5 has been modified. This allows for easy installation or removal of the printing platform 2 without the need to disassemble the release film assembly and leveling roller assembly when taking printed samples.

The bubble scraper 5 is installed at the bottom of the extended area of the liquid tank 1 through a spring and a guide shaft. The bubble scraper 5 can float up and down within a range of less than 2mm under the action of the spring and guide shaft. When the release film moves horizontally, the bubble scraper 5 moves horizontally with the release film to perform the bubble scraping function. The bubble scraper 5 can be a unidirectional bubble scraper or a bidirectional bubble scraper. The unidirectional bubble scraper can be referred to in patent publication number CN113942224A.

In the 3D printing device of this embodiment, as shown in Figure 3, the printing platform 2 and the release film have been leveled and focused before printing. The method of use includes the following steps:
1. install the printing platform: Move the release film and the leveling roller assembly 4 horizontally to the left side of the liquid tank 1 and install the printing platform 2;
2. move to the printing position: Move the release film and the leveling roller assembly 4 horizontally to the right side of the liquid tank 1 to the printing position;
3. raise the printing platform: The printing platform 2 rises to a distance of one layer thickness below the lower surface of the release film, waiting for leveling;
4. scroll leveling step 1: The release film remains stationary relative to the liquid tank 1, and the leveling roller assembly 4 starts moving to the left and stops after moving to the left side of the release film;
5. scroll leveling step 2: The release film remains stationary relative to the liquid tank 1, and the leveling roller assembly 4 starts moving to the right until reaching the right side of the release film;
6. scroll leveling cycle: Repeat steps 3 to 5 until the bulge of the release film is eliminated;
7. exposure: The pattern is focused on the release film through the UV lens 8 by UV surface projection, and exposure curing is performed to obtain a cured pattern. The exposure can be single projection exposure, multi-light machine projection exposure, or XY-axis driven multi-projection exposure;
8. release: The printing platform 2 descends to separate the cured printed sample 7 from the release film;
9. bubble scraping step 1: Move the release film and the leveling roller assembly 4 horizontally to the left side of the liquid tank 1, triggering the upward movement of the unidirectional bubble scraper 5 to press against the lower surface of the release film;
10. bubble scraping step 2: Move the release film and the leveling roller assembly 4 horizontally to the right side of the liquid tank 1 to the printing position. During this process, the bubble scraper 5 works to scrape the bubbles from the lower surface of the release film. When they reach the right side of the liquid tank 1, the unidirectional bubble scraper 5 is triggered to descend and separate from the lower surface of the release film;
11. layer-by-layer printing: Repeat steps 3 to 10 until the sample printing is completed;
12. remove the printing platform: Move the release film and the leveling roller assembly 4 horizontally to the left side of the liquid tank 1 and remove the printing platform 2 with the printed sample 7.

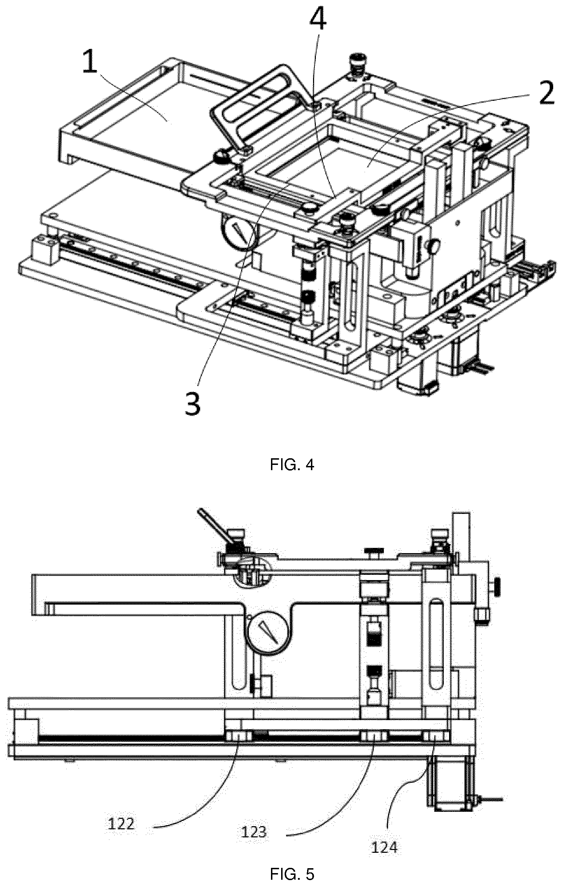

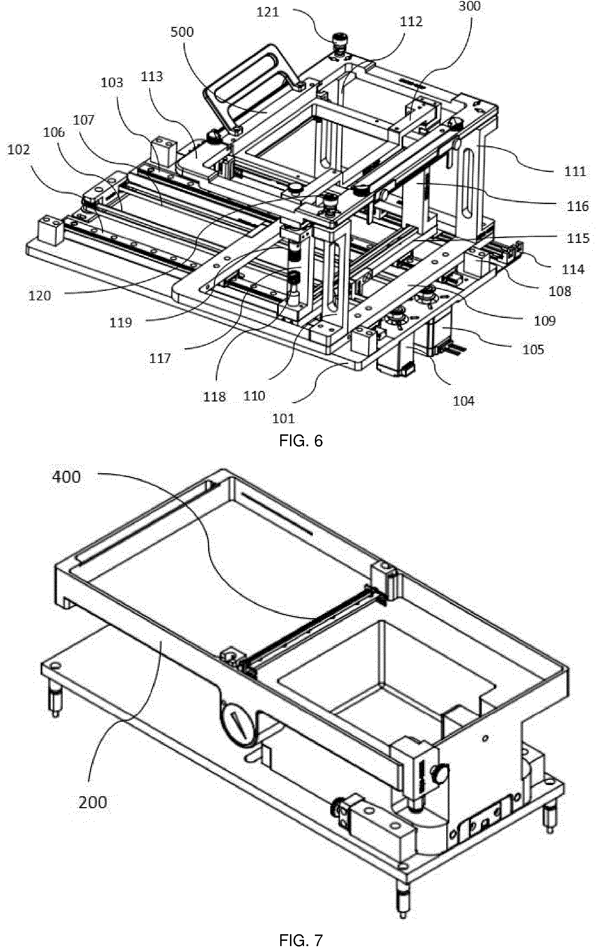

Preferably, as shown in Figures 4, 5, and 7, the liquid tank 1 of the 3D printing device in this embodiment has a hollow interior in the main body 200 of the liquid tank. It can store liquid resin. As shown in Figure 7, the right side of the liquid tank 1 has a deeper main body area, and the left side has a shallower extended area. The main body 400 of the bubble scraper is fixed at the bottom of the extended area near the edge adjacent to the main body area.

Preferably, as shown in Figures 4, 5, and 6, the release film assembly 3 includes:
- a mounting substrate 101;
- linear guides 102 and 103, fixed on the mounting substrate 101 along the first direction (the direction in which the printing platform 2 moves between the main body area and the extended area of the liquid tank 1);
- release film support assembly, installed on the linear guides 102 and 103 and capable of moving along the first direction under the drive of the release film driving assembly. The release film support assembly has a release film clamping component 500, and the release film is mounted on the release film clamping component 500.

Preferably, as shown in Figures 5 and 6, the release film support assembly includes:
- a transmission frame 109 connected to the linear guides 102 and 103 through first sliders 122 and 124;
- release film leveling pillars 110, 111, 112 fixed on the transmission frame 109;
- a leveling frame 113 connected to the release film leveling pillars 110, 111, 112 through release film leveling knobs 120, 121; the leveling frame 113 is equipped with a release film clamping component 500.

This structure enables the movement of the release film support assembly along a first direction, and the leveling frame 113 can be adjusted for levelness by release film leveling knobs 120, 121. Specifically, as shown in Figure 6, the transmission frame 109 and leveling frame 113 are rectangular, and the release film leveling pillars 110, 111, 112 are mounted on three corners of the transmission frame 109 and leveling frame 113. Leveling the leveling frame 113 means leveling the release film clamping component 500, which ensures that the release film is parallel to the projection focal plane. The upper ends of the three release film leveling pillars are connected to the leveling frame 113 through tension springs (not shown in the figure), leveling knobs, and steel balls (not shown in the figure), allowing the leveling frame 113 to be leveled by the leveling knobs, with two leveling knobs.

Preferably, as shown in Figure 6, the release film driving assembly includes:
- a first stepper motor 105 fixed at the bottom of the mounting substrate 101;
- a first timing belt 107 connecting the first stepper motor 105 to the transmission frame 109, driving the transmission frame 109. Optionally, the release film driving assembly can be any linear motion driving assembly, such as using a stepper motor, linear guides, and timing belts, or a servo motor + linear guides + lead screw, or any other component capable of achieving linear motion.

Preferably, in this embodiment of the 3D printing device for convenient operation, as shown in Figure 6, the roller blade driving assembly includes:
- a second stepper motor 104 fixed at the bottom of the mounting substrate 101;
- a second timing belt 106 connecting the second stepper motor 104 to the roller blade support assembly, driving the roller blade support assembly, which is movably mounted on the linear guides 102 and 103. Furthermore, the second timing belt 106 can be aligned parallel to and share an installation frame with the first timing belt 107.

Preferably, in this embodiment of the 3D printing device for convenient operation, as shown in Figure 6, the roller blade support assembly includes:
- a transmission connecting rod 115 connecting the linear guides 102 and 103 through the second slider 123;
- rear roller leveling pillar 116 and front roller leveling pillar 117, respectively mounted on both sides of the transmission connecting rod 115; the connection points between the rear roller leveling pillar 116, front roller leveling pillar 117, and the transmission connecting rod 115 are adjusted by rear roller leveling knob 118 and front roller leveling knob 119.

The top of the rear roller leveling pillar 116 and front roller leveling pillar 117 is connected to the leveling roller main body 300.

Preferably, as shown in Figure 6, the mounting substrate 101 is also provided with limitation blocks 108, which are set at the four corners of the mounting substrate 101 to prevent the movement of the transmission frame 109 from exceeding the operating limits. The mounting substrate 101 is also equipped with a position sensor 114, which is installed on one side edge of the mounting substrate 101 to sense the position of the transmission frame 109, and the lateral movement position of the release film clamping component 500 is restricted by the position sensor 114.

Based on the exemplary embodiments described in this disclosure, relevant personnel can make various changes and modifications without departing from the scope of the technical concept of this disclosure. The technical scope of this disclosure is not limited to the content of the specification and must be determined based on the scope of the claims.

## Claims

1. A 3D printing device for convenient operation, **characterized by** comprising:
a liquid tank (1) for accommodating liquid resin (6) for printing, the liquid tank (1) having a main area and an extended area, the extended area being located on one side of the top of the main area;
a printing platform (2) for supporting a printed sample (7), extending into the main area of the liquid tank (1);
a release film assembly (3) comprising a release film and a release film driving component, the release film driving component being used to drive the release film for translation, so that the release film moves between the main area and the extended area;
a leveling roller assembly (4) comprising a leveling roller main body (300) and a roller driving component, the roller driving component being used to drive the leveling roller main body (300) for translation, so that the leveling roller main body (300) moves between the main area and the extended area, the lowest point of the leveling roller main body (300) being flush with the upper surface of the release film;
a bubble scraper (5) positioned within the extended area and fixed at the bottom of the extended area of the liquid tank (1) near one side of the main area, the top of the bubble scraper (5) being aligned with the bottom of the release film.

2. The 3D printing device according to claim 1, **characterized in that** the bubble scraper (5) is mounted at the bottom of the extended area of the liquid tank (1) through a spring and a guide shaft.

3. The 3D printing device according to claim 1, **characterized in that** the release film assembly (3) comprises:
a mounting substrate (101);
linear guides (102, 103) fixed on the mounting substrate (101) in a first direction, wherein the first direction is the direction in which the printing platform (2) moves between the main area and the extended area of the liquid tank (1);
a release film support assembly mounted on the linear guides (102, 103) and capable of moving in the first direction under the driving of the release film driving component, the release film support assembly having a release film clamping component (500); the release film is mounted on the release film clamping component (500).

4. The 3D printing device according to claim 3, **characterized in that** the release film support assembly comprises:
a transmission frame (109) connected to the linear guides (102, 103) through first sliders (122, 124);
release film leveling pillars (110, 111, 112) fixed on the transmission frame (109);
a leveling frame (113) connected to the release film leveling pillars (110, 111, 112) through release film leveling knobs (120, 121); the leveling frame (113) is equipped with the release film clamping component (500).

5. The 3D printing device according to claim 4, **characterized in that** the release film driving component comprises:
a first stepper motor (105) fixed at the bottom of the mounting substrate (101);
a first timing belt (107) connecting the first stepper motor (105) and the transmission frame (109) to drive the transmission frame (109).

6. The 3D printing device according to claim 3, **characterized in that** the mounting substrate (101) further includes limitation blocks (108) positioned at the four corners of the mounting substrate (101) to prevent the movement of the transmission frame (109) beyond the operational limits.

7. The 3D printing device according to claim 4, **characterized in that** a position sensor (114) is further provided on the mounting substrate (101), and the sensor (114) is mounted on one side edge of the mounting substrate (101) to sense the position of the transmission frame (109), and the lateral movement position of the release film clamping component (500) is limited by the position sensor (114).

8. The 3D printing device according to claim 5, **characterized in that** the roller drive assembly comprises:
a second stepper motor (104) fixed at the bottom of the mounting substrate (101);
a second timing belt (106) connecting the second stepper motor (104) and the roller support assembly, to drive the roller support assembly, which is movably mounted on the linear guides (102, 103).

9. The 3D printing device according to claim 8, **characterized in that** the roller support assembly comprises:
a transmission connecting rod (115) connected to the linear guides (102, 103) through a second slider (123);
a rear roller leveling pillar (116) and a front roller leveling pillar (117) respectively installed on both sides of the transmission connecting rod (115); the connection between the rear roller leveling pillar (116) and the front roller leveling pillar (117) and the transmission connecting rod (115) is adjusted by a rear roller leveling knob (118) and a front roller leveling knob (119), respectively;
the top of the rear roller leveling pillar (116) and the front roller leveling pillar (117) is connected to the leveling roller main body (300).

10. A method for 3D printing using a release film to push liquid for coating, **characterized by** using the 3D printing device according to any one of claims 1 to 9, comprising the following steps:
S1, moving the release film and the leveling roller assembly to an extended area, and placing the printing platform (2) into the main body area of the liquid tank (1);
S2, controlling the movement of the release film to the main body area, controlling the lifting of the printing platform (2) to the printing position, ensuring that the printing platform (2) is at a distance of one layer thickness from the lower surface of the release film, and waiting for leveling;
S3, keeping the release film stationary, moving the leveling roller assembly towards the main body area of the liquid tank (1), and stopping after moving to the left or right edge of the release film;
S4, keeping the release film stationary, moving the leveling roller assembly to the other side edge of the release film;
S5, repeating steps S3 to S4 until the bulging of the release film is eliminated;
S6, focusing the pattern on the release film using a UV lens (8), performing exposure curing, and obtaining a cured pattern;
S7, controlling the lowering of the printing platform (2) to separate the cured printed sample (7) from the release film;
S8, controlling the lateral movement of the release film and the leveling roller assembly to the extended area of the liquid tank (1), and then controlling the upward movement of the bubble scraper (5) to press against the lower surface of the release film;
S9, controlling the lateral movement of the release film and the leveling roller assembly to the main body area of the liquid tank (1), using the bubble scraper (5) to scrape the bubbles on the lower surface of the release film, and then controlling the downward movement of the bubble scraper (5);
S10, repeating steps S2 to S9 until the sample printing is completed;
S11, controlling the lateral movement of the release film and the leveling roller assembly to the extended area of the liquid tank (1), and removing the printing platform (2) with the printed sample (7).
